Europäisches Patentamt

European Patent Office

Office européen des brevets

(11) Numéro de publication : **0 356 301 B1**

(12) **FASCICULE DE BREVET EUROPEEN**

(45) Date de publication du fascicule du brevet :
**10.06.92 Bulletin 92/24**

(51) Int. Cl.$^5$ : **A23G 3/00,** A23G 3/02,
A23G 3/20

(21) Numéro de dépôt : **89402249.0**

(22) Date de dépôt : **09.08.89**

(54) **Procédé pour la fabrication de confiseries à base de polyols.**

(30) Priorité : **18.08.88 FR 8810990**

(43) Date de publication de la demande :
**28.02.90 Bulletin 90/09**

(45) Mention de la délivrance du brevet :
**10.06.92 Bulletin 92/24**

(84) Etats contractants désignés :
**BE CH DE ES GB IT LI NL**

(56) Documents cités :
**CH-A- 524 960
FR-A- 2 072 535
FR-A- 2 202 867
FR-A- 2 357 185
GB-A- 905 850
GB-A- 1 481 846
GB-A- 2 079 129
GB-A- 2 099 276**

(56) Documents cités :
**US-A- 1 478 834
DERWENT FILE SUPPLIER WPI/L, AN 76-
84206x, 1976, Derwent Publications, Londres,
GB; & JP-A-51 108 005 (HIRAIWAT)26-09-1976**

(73) Titulaire : **KRAFT GENERAL FOODS FRANCE
6, Rue Lionel Terray
F-92500 Rueil Malmaison (FR)**

(72) Inventeur : **Lemaire, Gérald Joel
3 rue Boucton Faureaux
F-51420 Vitry les Rois (FR)**
Inventeur : **Benoit, Yannick Lucien
133 rue Edmond Rostand
F-51100 Reims (FR)**
Inventeur : **Plumet, Daniel
23 rue du Gâtinais
F-89140 Pont s/Yonne (FR)**

(74) Mandataire : **Jolly, Jean-Pierre et al
Cabinet Jolly 54, rue de Clichy
F-75009 Paris (FR)**

## Description

La présente invention concerne un procédé et un appareillage pour la fabrication de confiseries à base de polyols.

On sait que la substitution de certains polyols aux sucres alimentaires (saccharose et glucose) utilisés habituellement pour la préparation de bonbons durs ou d'autres confiseries, a amené les fabricants à modifier de façon importante les procédés usuels de préparation de ces confiseries.

En effet, les confiseries traditionnelles sont préparées en dissolvant le sucre et le sirop de glucose dans de l'eau, en ajoutant à la solution les ingrédients usuels du type de confiserie préparé (lait, graisses, arômes, agents de sapidité, agents de texture et adjuvants techniques auxiliaires) et en chauffant la solution jusqu'à l'obtention d'une pâte telle qu'elle puisse se conserver et se travailler en vue d'obtenir la texture désirée (sucre dur, pâte à mâcher ou autre).

Notamment, cette pâte peut être coulée goutte à goutte (technique dite des pastilles à la goutte), éventuellement dans des cavités formant moules, pour obtenir la confiserie désirée.

Les avantages présentés par les polyols du type du xylitol (hygroscopie pratiquement nulle, pouvoir sucrant équivalent à celui du saccharose, point de fusion peu élevé, effet de fraîcheur endothermique, pouvoir acariogène...) ont amené à les substituer aux sucres alimentaires dans certaines confiseries.

Parmi ces polyols, le xylitol présente l'avantage, par rapport aux sucres alimentaires, de fondre à environ 90°C, ce qui permet de se dispenser des opérations habituelles de dissolution, de chauffage et de concentration de la solution résultante, pour y substituer une simple opération de fusion, les ingrédients de la confiserie étant ensuite incorporés dans le xylitol à l'état fondu, avant de couler celui-ci pour obtenir les confiseries, par refroidissement et cristallisation, par la même technique de pastille à la goutte.

Un inconvénient sérieux du xylitol est toutefois sa tendance marquée à demeurer en surfusion, jusqu'à des températures aussi basses que 0°C, ce qui complique les opérations de cristallisation de la confiserie sur le support (généralement un convoyeur continu), sur lequel le produit fondu est coulé.

Pour remédier à cet inconvénient, il est d'usage d'introduire dans la masse de xylitol fondu, avant de couler celui-ci, une quantité relativement importante, pouvant atteindre 20% en poids, de cristaux de xylitol, servant de germes de cristallisation pour le produit coulé. Cet ensemencement du xylitol fondu entraîne cependant à son tour un inconvénient provenant du risque de prise en masse de ce xylitol avant qu'il ait été coulé goutte à goutte. Ceci implique que l'on procède à un contrôle poussé de la température et de la durée de séjour du xylitol fondu dans le réservoir de stockage, pour éviter une précristallisation dans le réservoir, dans les conduits qui y aboutissent, ou dans les pompes utilisées, avec les conséquences graves qui en résulteraient.

La présente invention vise à remédier à ces inconvénients de la technique antérieure, en ensemençant le xylitol ou un autre polyol fondu avec des germes de cristallisation non plus avant la coulée de la confiserie, mais après cette coulée.

La présente invention a par conséquent pour objet un procédé de fabrication de confiseries à base de polyol, du type dans lequel un mélange de polyol fondu et d'additifs est coulé goutte à goutte sur un support, sur lequel il cristallise par refroidissement, caractérisé en ce que la surface du support sur lequel est effectuée la coulée du mélange à base de polyol fondu est revêtue d'un lit de cristaux dudit polyol aptes à former des germes de cristallisation pour le mélange coulé.

On a déjà proposé de réaliser des confiseries en déposant des quantités déterminées d'un matériau liquide à l'état visqueux sur un lit de sucre en poudre (voir GB-A-905 850), mais le matériau liquide ainsi déposé est une gelée, dont le sucre n'a pas pour but de provoquer la cristallisation, ce sucre servant seulement à former une gaine solide autour de la gelée.

On a également proposé (voir CH-A-524 960) de déposer des gouttes d'un sirop contenant un agent d'expansion sur un lit d'un matériau comestible pulvérulent, du sucre par exemple, mais dans ce procédé également, le sucre n'a pas pour but de cristalliser le sirop, les gouttes de celui-ci étant ensuite expansées et séchées par chauffage.

Dans le procédé de la demande, au contraire, le polyol est coulé à l'état fondu sur des cristaux du même polyol qui agissent comme des germes de cristallisation pour le mélange coulé.

Dans une première forme de mise en oeuvre de l'invention, les cristaux de polyol seront simplement dispersés sur la surface du support et il pourra s'agir de cristaux grossiers, broyés ou non, sur lesquels le mélange à base de sucre alcool fondu sera coulé par le procédé de pastille à la goutte.

Dans une seconde forme de mise en oeuvre de l'invention, le lit de cristaux de sucre alcool sera constitué d'une couche suffisamment épaisse d'une poudre de cristaux suffisamment fins pour que l'on puisse y former par pression des empreintes, à l'aide d'un outil de forme, le mélange fondu étant ensuite coulé dans ces empreintes, qui forment ainsi un moule pour la confiserie fondue tout en apportant au mélange fondu les germes nécessaires à sa bonne cristallisation. Le lit de cristaux utilisé dans cette forme de mise en oeuvre pourra comprendre des cristaux ayant une dimension maximum de l'ordre de 0,1 à 1 mm. Il pourra s'agir également de cristaux broyés très finement, d'une dimension de l'ordre de 20 à 50 μm.

Ces deux formes de mise en oeuvre seront décrites ci-après en détail dans le cas où le polyol est le xylitol, mais l'invention n'est pas limitée, naturellement, à ce composé et s'applique au contraire à tout autre polyol présentant des propriétés similaires et susceptible d'être utilisé en confiserie, ce qui est notamment le cas du sorbitol.

Le support sur lequel est coulé le mélange à base de polyol pourra être avantageusement constitué, de façon connue en soi, d'un convoyeur continu, sur lequel le lit de cristaux de polyol sera formé en amont du point de coulée par déversement de ces cristaux à partir d'une enceinte de stockage.

L'appareillage pour la fabrication de confiseries à base de polyol par le procédé conforme à l'invention comprendra des moyens pour amener ledit polyol à l'état fondu, des moyens pour incorporer les autres composants de la confiserie dans le polyol fondu, au moins un moyen pour couler goutte à goutte le mélange résultant, un convoyeur se déplaçant au-dessous du moyen de coulée, ainsi que, d'une part, en amont dudit moyen de coulée, un moyen pour déposer un lit de cristaux dudit polyol à la surface du convoyeur et, d'autre part, en aval du moyen de coulée, un moyen de séparation des confiseries cristallisées obtenues du reste desdits cristaux.

Cet appareillage pourra éventuellement comporter, entre le moyen de coulée du mélange à base du polyol fondu et le moyen pour déposer le lit de cristaux de polyol sur le moyen de convoyage, au moins un moyen pour former dans ledit lit des empreintes d'une forme déterminée destinées à recevoir le mélange fondu.

Le moyen de séparation des confiseries cristallisées et des cristaux restants du polyol pourra comprendre un simple tamis vibrant incliné, sur lequel seront déversés par le convoyeur les confiseries et les cristaux de polyol, les confiseries pouvant ainsi être récupérées en aval du tamis vibrant, tandis que les cristaux de polyol seront récupérés au-dessous du tamis.

Les dessins schématiques annexés illustrent le procédé conforme à l'invention. Sur ces dessins:

La figure 1 est un diagramme d'ensemble du dispositif utilisé pour la mise en oeuvre du procédé;

La figure 2 est une vue de détail à plus grande échelle illustrant une première forme de mise en oeuvre de ce procédé;

La figure 3 est une vue analogue à la figure 2 illustrant une seule forme de mise en oeuvre du procédé.

Dans cette forme de mise en oeuvre de l'invention, de la poudre de xylitol est fondue à une température supérieure à 90°C et pouvant aller jusqu'à environ 160°C dans une enceinte de fusion 1, comprenant une paroi double 2 calorifugée, à circulation d'un liquide caloporteur amené par la ligne 3 et évacué par la ligne 4.

Une ligne 5, munie d'une vanne 6, permet d'évacuer le xylitol fondu à la base de l'enceinte 1 et de le transférer dans un réservoir de stockage 7. Ce réservoir est également calorifugé et comprend dans ce but une double paroi 8 alimentée en liquide caloporteur par la ligne 9, ce liquide étant évacué par la ligne 10. Le réservoir 8 est maintenu à une température sensiblement égale à celle de l'enceinte 1.

Une ligne 11, munie d'une vanne 12, permet de transférer le xylitol fondu du réservoir de stockage 7 à un mélangeur 13. Cette ligne 10 traverse un échangeur thermique 14, où le xylitol fondu est refroidi jusqu'à une température inférieure à 90°C, par échange de calories avec un fluide amené par la ligne 15 et évacué par la ligne 16.

Dans le mélangeur 13 sont introduits également, à partir de postes de stockage tels que 17 et 18, par des lignes telles que 19 et 20, des arômes, des colorants et, plus généralement, les autres constituants de la confiserie que l'on désire préparer. Tous ces composants sont mélangés sous agitation au xylitol fondu, dans le mélangeur 13, et le mélange résultant est ensuite transféré par la ligne 21 à un dispositif d'éjection 22, permettant d'évacuer à intervalles préfixés des quantités réglables de ce mélange, à une température d'environ 70°C.

Le dispositif 22 est disposé à l'aplomb d'un convoyeur continu 23, entraîné par des moyens moteurs non représentés, à l'extrémité amont du brin supérieur duquel de la poudre de xylitol cristallisé est déversée par une trémie 24. Cette poudre y forme un lit pulvérulent 25, au contact duquel vont se cristalliser les gouttes du mélange fondu à base de xylitol évacuées par le dispositif 22.

A l'extrémité aval du convoyeur 23, les confiseries 26 résultant de la cristallisation du mélange fondu et les cristaux restants de xylitol sont déversés sur un tamis vibrant 27, au-dessous duquel la poudre de xylitol est récupérée dans un bac 28, tandis que les confiseries 26 sont récupérées dans un bac 29 à l'extrémité du tamis 27.

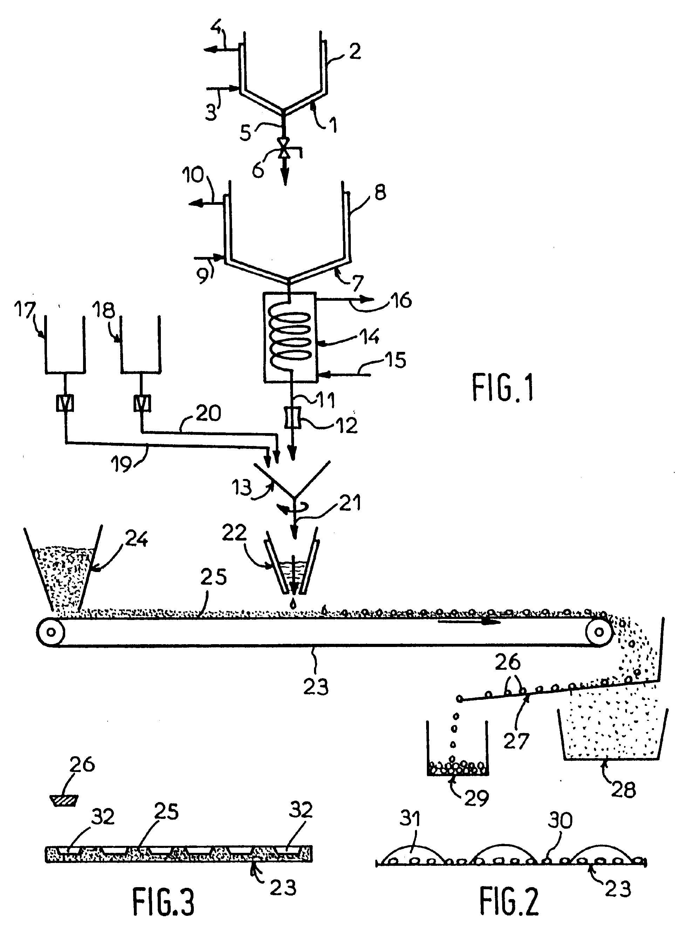

Comme on le voit sur la figure 2, le lit de xylitol cristallisé reposant sur le convoyeur 23 peut être constitué simplement de cristaux grossiers 30 espacés les uns des autres, qui servent de germes de cristallisation pour les gouttes 31 de mélange fondu à base de xylitol, en vue de réaliser des confiseries par le procédé dit de pastille à la goutte.

Le lit 25 de xylitol cristallisé peut aussi avoir une épaisseur appréciable et être alors formé d'une poudre de très petits cristaux ou de cristaux plus importants finement broyés (figure 3). Dans ce cas, des outils de forme non représentés, disposés en amont du dispositif 22 de coulée du mélange fondu à base de xylitol, pratiquent dans le lit des empreintes 32, dans lesquelles est coulé le mélange fondu pour y former des confiseries 26 d'une forme complémentaire de celle de l'empreinte. Cette forme de mise en oeuvre de l'invention est dérivée d'un procédé connu, dans lequel certains types de confiseries traditionnelles (gélifiés, fondants) sont coulés dans des empreintes ménagées dans un lit d'amidon.

En utilisant un lit de polyol cristallisé, de même nature que le mélange fondu coulé, on apporte les germes qui permettent d'éviter sa surfusion et qui, au contraire, en provoquent la cristallisation quasi immédiate sur le convoyeur.

L'invention apporte donc un moyen simple et facile à mettre en oeuvre pour la préparation de confiseries à base de xylitol. Les formulations de ces confiseries sont bien connues dans la technique et ne présentent pas de caractère critique dans le cadre de la présente invention. A titre d'exemple, on mentionnera par exemple la formulation suivante, en % en poids:

```
- arôme :                          1%
- acide citrique :                 1%
- colorant :                          0,05%
- xylitol:                q.s.p. 100%.
```

Ainsi qu'il a été indiqué ci-dessus, l'invention n'est pas limitée aux confiseries à base de xylitol, mais s'applique à tout autre polyol utilisable en confiserie et présentant un phénomène de surfusion, par exemple le sorbitol.

On notera qu'avec le procédé conforme à l'invention, on élimine les contrôles physiques sévères qui, antérieurement, devaient être effectués dans le réservoir de stockage et dans le dispositif de mélange pour prévenir la prise en masse du xylitol fondu, ce qui simplifie considérablement la mise en oeuvre du procédé. On notera également que le procédé peut être mis en oeuvre à un faible coût, sans utiliser d'adjuvants techniques auxiliaires. On notera enfin la grande souplesse du procédé, qui se prête à tout moment à un changement du type des confiseries à base de xylitol ainsi réalisées.

## Revendications

1. Procédé de fabrication de confiseries à base d'un polyol, du type dans lequel un mélange de polyol fondu et d'additifs est coulé goutte à goutte sur un support, sur lequel il cristallise par refroidissement, caractérisé en ce que la surface du support (23) sur lequel est effectuée la coulée du mélange à base de polyol fondu est revêtue d'un lit (25) de cristaux dudit polyol aptes à former des germes de cristallisation pour le mélange coulé.

2. Procédé selon la revendication 1, caractérisé en ce que le lit de cristaux de polyol comprend des cristaux dispersés à la surface dudit support et en ce que ledit mélange à base de polyol fondu est déposé sous forme de gouttes sur lesdits cristaux.

3. Procédé selon la revendication 1, caractérisé en ce que le lit de cristaux de polyol est constitué de cristaux suffisamment petits, sur une épaisseur suffisante pour que l'on puisse y réaliser par pression, de façon connue en soi, à l'aide d'outils de forme, des empreintes d'une formé complémentaire de celle que l'on désire conférer aux confiseries, en ce que l'on pratique ces empreintes dans ledit lit préalablement à la coulée du mélange à base de polyol fondu, et en ce que l'on coule ce mélange dans lesdites empreintes.

4. Procédé selon la revendication 3, caractérisé en ce que le lit de cristaux de polyol comprend des cristaux ayant une dimension maximum de l'ordre de 0,1 à 1 mm ou est constitué d'une poudre de cristaux broyés d'une dimension de l'ordre de 20 à 50 $\mu$m.

5. Procédé selon l'une des revendications 1 à 4, caractérisé en ce que, après cristallisation du mélange à base de polyol fondu sur le lit de cristaux de sucre alcool, les confiseries résultant de cette cristallisation sont séparées, notamment par tamisage, du reste desdits cristaux.

6. Procédé selon l'une des revendications 1 à 5, caractérisé en ce que ledit polyol est du xylitol.

7. Procédé selon l'une des revendications 1 à 5, caractérisé en ce que ledit polyol est du sorbitol.

**Patentansprüche**

1. Verfahren zur Herstellung von Süßwaren auf der Grundlage eines Polyalkohols, bei welchem ein Gemisch aus geschmolzenem Polyalkohol und Zusatzstoffen tropfenweise auf eine Unterlage gegossen wird, auf welcher es durch Abkühlung kristallisiert, **dadurch gekennzeichnet,** daß die Oberfläche der Unterlage (23), auf welche das Gemisch auf der Grundlage geschmolzenen Polyalkohols gegossen wird, mit einer Lage (25) aus Kristallen des Polyalkohols überzogen wird, wobei die Kristalle zur Bildung von Kristallkeimen bei der Kristallisation des vergossenen Gemisches geeignet sind.

2. Verfahren nach Anspruch 1, **dadurch gekennzeichnet,** daß die Lage aus Polyalkoholkristallen Kristalle aufweist, die auf die Oberfläche der Unterlage aufgestreut sind, und daß das Gemisch auf der Grundlage geschmolzenen Polyalkohols in Form von Tropfen auf die Kristalle aufgetragen wird.

3. Verfahren nach Anspruch 1, **dadurch gekennzeichnet,** daß die Lage aus Polyalkoholkristallen aus ausreichend kleinen Kristallen besteht und eine Dicke aufweist, die ausreicht, um unter Druck in an sich bekannter Weise mit Hilfe von Formwerkzeugen darin Vertiefungen zu bilden, deren Form komplementär zur gewünschten Form der Süßwaren ist, daß man diese Vertiefungen in der Lage vor dem Aufgießen des Gemisches auf der Grundlage geschmolzenen Polyalkohols bildet, und daß dieses Gemisch in diese Vertiefungen vergossen wird.

4. Verfahren nach Anspruch 3, **dadurch gekennzeichnet,** daß die Lage aus Polyalkoholkristallen Kristalle enthält, deren maximale Größe im Bereich zwischen 0,1 und 1 mm liegt, oder daß sie aus einem Pulver aus gebrochenen Kristallen besteht, die eine Größe im Bereich von 20 bis 50 µm aufweisen.

5. Verfahren nach einem der Ansprüche 1 bis 4, **dadurch gekennzeichnet,** daß nach der Kristallisierung des Gemisches auf der Grundlage geschmolzenen Polyalkohols auf der Lage von Kristallen aus Zukkeralkohol die durch diese Kristallisierung hergestellten Süßwaren von den übrigen Kristallen getrennt werden, insbesondere durch Absieben.

6. Verfahren nach einem der Ansprüche 1 bis 5, **dadurch gekennzeichnet,** daß der Polyalkohol fünfwertiger Alkohol ist.

7. Verfahren nach einem der Ansprüche 1 bis 5, **dadurch gekennzeichnet,** daß der Polyalkohol Sorbit ist.

**Claims**

1. A process for manufacturing confectionery with a polyol base, of the type in which a mixture of melted polyol and additives is poured drop by drop onto a support, on which it crystallized by cooling, characterized in that the surface of the support (23) onto which the mixture with a melted polyol base is poured is coated with a bed (25) of crystals of said polyol capable of forming crystallisation seeds for the mixture poured thereon.

2. A process according to claim 1, characterized in that the bed of polyol crystals comprises crystals dispersed on the surface of said support and in that said mixture with a melted polyol base is deposited in the form of drops on said crsystals.

3. A process according to claim 1, characterized in that the bed of polyol crystals consists of crystals which are sufficiently small and in a sufficient thickness for it to possible to effect by pressure, in a manner known per se, with the aid of shaping tools, imprints of a form complementary to that which it is desired for the confectionery to have, in that these imprints are formed in said bed before the mixture with the melted polyol base is poured thereon, and in that this mixture is poured into said imprints.

4. A process according to claim 3, characterized in that the bed of polyol crystals comprises crystals of a maximum size of the order of from 0.1 to 1 mm or consists of a powder of ground crystals of a size of the order of from 20 to 50 µm.

5. A process according to any one of claims 1 to 4, characterized in that, after crystallization of the fixture with a melted polyol base on the bed of crystals of sugar alcohol, the confectionery resulting from this crystallization is separated, especially by sieving, from the rest of said crystals.

6. A process according to any one of claims 1 to 5, characterized in that said polyol is xylitol.

7. A process according to any one of claims 1 to 5, characterized in that said polyol is sorbitol.

FIG.1

FIG.3

FIG.2